# EUROPEAN PATENT APPLICATION

(11) **EP 1 954 047 A1**
(43) Date of publication of application: **06.08.2008**
(21) Application number: 06775542.1
(22) Date of filing: 30.08.2006
(51) Int. Cl.: H04N 7/173

(54) **A METHOD AND A SYSTEM FOR RECEIVING IPTV SERVICE**

(30) Priority: 24.11.2005 CN 200510123920
(71) Applicant: Huawei Technologies Co., Ltd., Longgang District Shenzhen 518129 (CN)
(72) Inventor: ZUO, Minglei, Shenzhen, Guangdong 518129 (CN)
(74) Representative: Manitz, Finsterwald & Partner GbR
(86) International application number: PCT/CN2006/002225
(87) International publication number: WO 2007/059677

(57) **Abstract**

The present invention discloses a system and method for receiving an internet protocol television (IPTV) service. An IPTV service to digital media server (DMS) service conversion device (IPTV2DMS) requests to acquire IPTV media information for an IPTV subscriber to select and requests to acquire IPTV media flow selected by the subscriber according to the subscriber's selection. The IPTV2DMS converts the IPTV media flow to a format supported by DMP after receiving the converted IPTV media flow provided by the IPTV head-end. The DMP decodes and outputs the converted IPTV media flow to a displaying device to playing for the IPTV subscriber. To sum up, the present invention makes it convenient for a subscriber watching the IPTV on different TVs without an additional set-top box (STB), and reduces the cost of the subscriber and enhances the playing quality with the reduction of subscriber's repeat paying due to the adoption of storing-forwarding module.

## Description

### Field of the Invention

The present invention relates to the internet protocol television technique, and more particularly, to a system and a method for receiving an internet protocol television service.

### Background of the Invention

Internet protocol television (IPTV) receives such digital media contents as video and audio from a wide-band network. As the wide-band network is based on bidirectional communication over IP, it is easier to implement a video on demand (VoD) service. Subscribers can select interesting programs at any moment at home.

A whole IPTV system includes a head-end system and terminal equipment. The head-end system includes a subscriber management system, an electronic program guide (EPG) system, a video coder, and a media server. The subscriber management system is used for managing an account number, registration and validation of a subscriber when the subscriber logs on and is also used for dealing with accounting information. The EPG system is in charge of generating program catalog and location information to be provided for a subscriber. The video coder is used to perform video compression coding so that the video can be transmitted using a lower bandwidth, wherein the coding manners can be various such as moving picture experts group 2 (Mpeg-2), Mpeg-4, H264, and window media video (WMV) etc. The contents encoded are stored in the media server which deals with subscriber's requests and transmits the contents to the subscriber.

The terminal equipment mostly refers to a set-top box (STB) set at the subscriber's home and used for receiving EPG information from the head-end system, outputting the received EPG information to such displaying device as a TV, and providing a man-machine operation interface simultaneously for subscriber selecting programs. The terminal equipment is also in charge of downloading media flow of code from an appointed location at the head-end system according to a selection of the subscriber and outputting the video to the TV or other displaying devices after the media flow is decoded.

At present, more and more attention has been paid to the IPTV as a main service in wide-band network and there are many operators beginning to implement the trial-operations of the IPTV service.

Additionally, along with the development of computers and wide-band networks, people may have a mass of personal media contents by the downloading through wide-band networks or storing the contents of conventional compact disk (CDs), digital versatile disc (DVDs), digital vidicons and digital cameras etc. after digital coding process into the hard disk of computer. In order to share and watch these media contents by TV, a requirement for playing media through home networks and corresponding technical products are accordingly generated.

To make the detection and control between home network devices easier, there are a great number of organizations constituting related standards to ensure the interconnection, among which the most famous one is the universal plug and play (UPnP) standardization organization. The UPnP standardization organization defines a media playing mechanism for home networks which has an audio video (AV) system architecture, and the playing mechanism defines related services and device functions of a standard digital media server (DMS), a digital media receiver (DMR), and a control point (CP). The DMR can implement decoding functions of audios and videos. The DMS provides information about media contents and the content catalog. The CP finds an online media server and a media player within home networks by the UPnP related protocols, and browses and finds the appointed contents by a content directory service (CDS) provided by the UPnP related protocols, and controls the DMS and DMR to perform connecting and playing by a connecting management service (CMS) of the server and player.

Generally speaking, the DMR and CP can be integrated in one device. A device called a digital media player (DMP) or a digital media adapter (DMA) which applies an UPnP AV system architecture standard has currently appeared in the market. It implements the DMR and CP functions defined by the UPnP and outputs audios and/or videos decoded to sound and/or displaying device such as TV, thereby a subscriber is enabled to watch media contents provided by the DMS from network sharing with other subscribers.

Among the present manners for implementing IPTV services, a terminal side receives the IPTV services by a special IP STB device, which implements communication with the IPTV head-end system to acquire electronic program information, receives a media program which is selected by a subscriber from the media server of the head-end system after the subscriber browsing the electronic program information and selecting a program, and outputs the received media program to the TV of the subscriber for watching after the video is decoded.

It can be known from the above, the conventional IPTV service has the following deficiencies.

Limited by the decoding process ability, the conventional IP STB can only perform a single-path standard definition TV decoding. If a subscriber has many TVs receiving programs simultaneously, each one should be provided with one STB device. And every STB should provide such functions as EPG process, subscriber control command process and media decoding process etc. which costs much.

In addition, if a subscriber watches the media contents stored in own home network, a DMP device is needed additionally. For a subscriber, a TV equipped with DMP device and IP STB device obviously costs much.

### Summary of the Invention

In view of the above, the object of the present invention is to provide a system for receiving an IPTV service to reduce the cost caused by watching IPTV media by different displaying devices. Another object of the present invention is to provide a method for receiving an IPTV service.

According to the above object, the present invention provides a system for receiving an Internet Protocol Television (IPTV) service, connected to an IPTV head-end and a displaying device, includes an IPTV service to digital media server (DMS) service conversion device (IPTV2DMS) and a digital media player (DMP);
the IPTV2DMS is used for communicating with the IPTV head-end to acquire IPTV media information; converting the IPTV media information acquired to a DMS service; requesting the IPTV head-end for IPTV media flow; after receiving the IPTV media flow, converting the IPTV media flow to a format supported by the DMP; and providing the converted IPTV media flow to the DMP;
the DMP is used for requesting the IPTV2DMS for the IPTV media flow; and transferring the IPTV media flow to the displaying device after the IPTV media flow is decoded.

The IPTV2DMS includes:
an IPTV communication module which is used for communicating with the IPTV head-end to acquire the IPTV media information; requesting the IPTV head-end for the IPTV media flow; after receiving the IPTV media flow, transferring the IPTV media flow to a media flow format converting module through an instruction converting module;
the instruction converting module which is used for instruction conversion between a DMS service and an IPTV service;
a DMS function module which is used for providing the DMS service according to the IPTV media information;
the media flow format converting module which is used for converting the IPTV media flow to the format supported by the DMP.

The IPTV2DMS further includes:
a storing-forwarding module which is used for storing and forwarding the IPTV media flow.

The IPTV2DMS is connected to the DMP through a physical communication interface supporting IP or through an intra-home IP network.

The present invention also provides a method for receiving an Internet Protocol Television (IPTV) service, which includes the following steps:
A: an IPTV2DMS acquires IPTV media information for an IPTV subscriber to select;
B: the IPTV2DMS receives the IPTV media information selected by the IPTV subscriber and requests an IPTV head-end for an IPTV media flow selected by the subscriber;
C: the IPTV2DMS converts the IPTV media flow to a format supported by a DMP device, and transfers the converted IPTV media flow to the DMP after receiving the IPTV media flow;
D: the DMP transfers the converted IPTV media flow to a displaying device after the converted IPTV media flow is decoded.

The step A includes: the IPTV2DMS receives IPTV media information from the IPTV head-end, transfers the converted IPTV media information to the DMP after converting the IPTV media information to a service information format of the DMS service, and displays the converted IPTV media information to a subscriber to select through the DMP.

The step C further includes: the converted IPTV media flow is stored after the format of the IPTV media flow is converted.

The method further includes a step of predetermining a priority for the IPTV media flow, and the step C further includes: the IPTV media flow having a higher priority is provided to the DMP via the wide band preferentially according to the priority of the IPTV media flow.

The step C includes: the IPTV2DMS determines whether the DMP supports the current format of the IPTV media flow, the format of the current IPTV media flow is converted to the format supported by the DMP in the case that the DMP does not support the current format of the IPTV media flow, and the converted media flow is provided to the DMP.

After the IPTV media flow is received, the step C further includes: the media flow is decrypted via a private decrypting key accredited by digital copyright protection.

As can be seem from the technical solution provided by the present invention, the present invention using an IPTV receiving system to convert an IPTV service to a standard DMS service, making it convenient for subscribers watching an IPTV by different TVs without additional STB. In this way, subscriber's cost may be reduced, playing quality may be enhanced, and subscribers' repeat paying due to the adoption of the storing-forwarding module may be decreased.

### Brief Description of the Drawings

Figure 1 is a chart illustrating an system architecture in the prior art;
Figure 2 is a chart illustrating architecture of the system described by the present invention;
Figure 3 is a chart illustrating relationships among modules of the system described by an embodiment according to the present invention;
Figure 4 is a flow chart of the method according to the present invention.

### Detailed Description of the Invention

An embodiment of the present invention makes use of an IPTV to DMS conversion device (IPTV2DMS) to convert an IPTV service to a DMS service; thereby a subscriber can watch IPTV on different TVs conveniently.

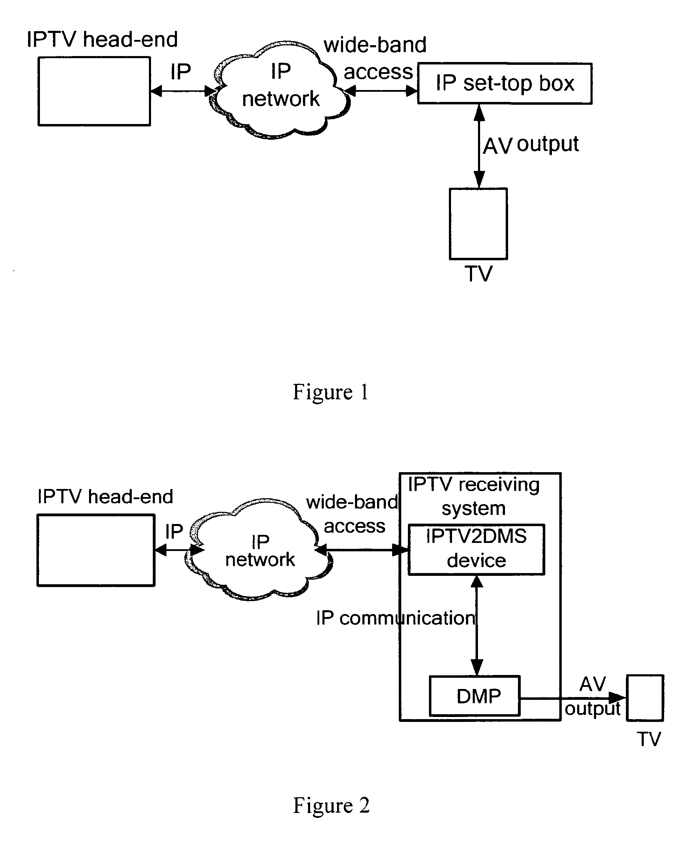

A structure of an IPTV service receiving system according to an embodiment of the present invention is shown in Figure 2, which at least includes a DMP and an IPTV to DMS (IPTV2DMS) device. The IPTV2DMS is connected to the DMP by IP communications through a physical communication interface supporting IP protocols or through an intra-home IP network communication. The intra-home IP network may be composed of an Ethernet switch, a wireless local area network access point (WLAN AP) or a home gateway. The IPTV service receiving system according to an embodiment of the present invention is connected to the IPTV head-end system by IP network to acquire IPTV media information provided by the IPTV head-end and converts the IPTV media information to AV and outputs the AV to such displaying device as TV connected with the IPTV head-end.

The DMP is called a DMA sometimes. In order to avoid confusion, it will be called the DMP hereinafter. The DMP integrates functions of the DMR and CP which are complying with the UPnP or IGRS. The DMP is mainly used for implementing DMR function, CP function and media decoding function which are complying with the UPnP AV or IGRS AV architecture standard.

The DMR functions include detection of the UPnP device and service, media playing control, CMS, and AV transfer service etc. The DMR is also used for connecting with a TV to output the received media data to the TV after the media is decoded.

The CP functions include detecting DMR and DMS devices and services through the UPnP or IGRS protocol, browsing and selecting programs according to subscriber's controls and setting up a media transfer connection by controlling the DMR and DMS.

The IPTV2DMS is used to communicate with the IPTV head-end and provide all other functions of the IPTV client which include receiving EPG data, requesting and selecting media and receiving media flow etc. except for media decoding. The IPTV2DMS communicates with a DMP device through home networks etc. and provides DMS functions including general UPnP device and service detection protocols, a CDS service, a CMS service and a content transfer service etc to the devices inside.

The IPTV2DMS is also used to implement data converting from an IPTV to a DMS and a converting function between the two data protocol formats to convert the format of EPG data to UPnP DMS standard format, convert the format of IPTV media flow to a media format supported by the DMP, convert the format of DMP control commands to corresponding IPTV playing control command formats, and transmit a request to the IPTV head-end.

The IPTV2DMS can appear as an independent device or a software-hardware function module integrated in other devices such as personal computer (PC), home gateway, IP STB, network game machine or IPTV.

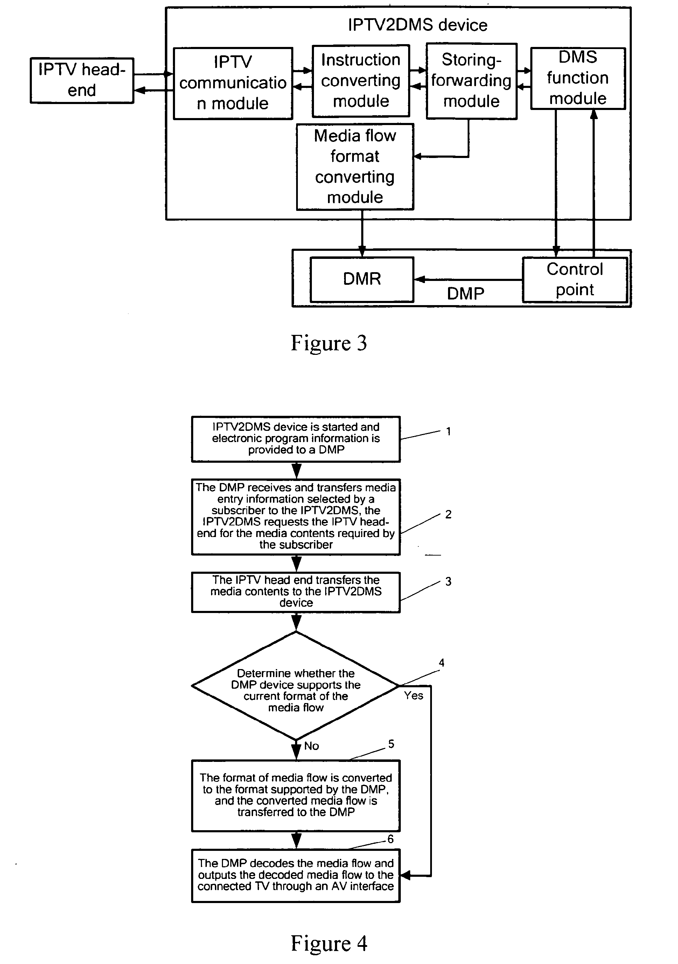

The structure of the IPTV2DMS is as shown in Figure 3. Referring to Figure 3, the IPTV2DMS includes an IPTV communication module, an instruction converting module, a DMS function module and a media flow format converting module, and further a storing-forwarding module as well.

The IPTV communication module is used to implement all functions of a simple IPTV except for media decoding, and the IPTV communication module can communicate with the IPTV head-end to obtain IPTV media information and IPTV media flow information, request the media server for the selected media, and receive the media flow.

The instruction converting module is a core part of the IPTV2DMS and is mainly in charge of coordinating works between the IPTV communication module, the DMS function module and the media flow format converting module to implement converting function between DMS instructions and IPTV instructions, the specific converting operations of which include:
1) converting the EPG acquired by the IPTV communication module to CDS service content information;
2) converting the UPnP CDS operations in the DMS function module to the EPG operations in the IPTV communication module, for example, when it is needed to play the contents of the content list of the UPnP CDS service, converting the contents of the UPnP CDS service to corresponding contents of the EPG and then the IPTV communication module playing the corresponding EPG contents;
3) forwarding the acquired media flow data to media flow format converting module via the storing-forwarding module;
   the storing-forwarding module is used for storing and forwarding media contents. When there is a subscriber ordering programs, the IPTV2DMS stores the contents of this order in the storing-forwarding module and releases the contents until there is nobody ordering the media. If, when a certain media is playing, there is another subscriber ordering the same media, the contents can be read from the storing-forwarding module without issuing request to the remote IPTV head-end. Thus, when there are multiple subscribers watching the same program, the contents stored in the storing-forwarding module can be forwarded without requesting the IPTV head-end for downloading. In this way, the pressure on exterior network can be reduced and a high playing quality is provided. At the same time, the subscribers may avoid paying repeatedly for the media charged according to the number of watching times. Also, live broadcast services can adopt the same manner. For instance, there is somebody watching a live broadcast game at home and there is another subscriber detecting that there is someone watching the live broadcast TV, he just needs to acquire the media contents from the storing-forwarding module to play, thereby he is enabled to watch the same living broadcast game.

The DMS function module is mainly in charge of providing such DMS service complying with the UPnP AV standard to the IPTV2DMS as general UPnP device and service detection protocols, CDS service, CMS service and content transfer service to the inside.

The media flow format converting module is mainly in charge of converting the format of media flow to the format supported by the DMP.

The flow chart illustrating receiving method of IPTV service according to an embodiment of the present invention is as shown in Figure 4, which includes the following steps:
Step 1: IPTV2DMS is started and media information, i.e. information of electronic programs is provided for a DMP.
   After the IPTV2DMS is started, the IPTV communication module of the IPTV2DMS transfers a message for requesting content catalog to an IPTV head-end and then obtains electronic programs information. After converting the format of electronic program information acquired from the IPTV head-end to the CDS service information format complying with the UPnP standard, an instruction converting module provides the CDS service information to the DMS function module. The DMP, through the detecting mechanism of the UPnP, detects the CDS service information of the DMS function module. For the DMP having user interface, the information of electronic programs is displayed on the user interface of the DMP for subscriber's operations. For the DMP without user interface, the information of electronic programs is displayed on the TV connected with the DMP, when the TV serves as a displaying device of the DMP and the subscriber's operations on the DMP are reflected on the TV.
Step 2: the DMP receives media entry information selected by a subscriber and transfers the received media entry information to the IPTV2DMS. The IPTV2DMS requests the IPTV head-end for the media contents required by the subscriber.
   The subscriber selects required media entry information and transfer the selected media entry information from a CP to the IPTV2DMS through a user interface of the DMP. After receiving the media entry information from the CP, the DMS function module of the IPTV2DMS transfers the media entry information to the instruction converting module to convert instructions. The instruction converting module of the IPTV2DMS converts the media entry information to the information which can be recognized by the IPTV head-end and transmits the converted media entry information to the IPTV communication module which requests the IPTV head-end for the media required by the subscribers.
Step 3: the IPTV head-end transmits the media to the IPTV2DMS. After converting the media contents to the media contents complying with the UPnP DMS through the instruction converting module, the IPTV2DMS stores the contents in the storing-forwarding module. When there are multiple subscribers at home implementing VoD through the IPTV, in order to ensure the quality of each VoD, priority of media can be prescribed to ensure that bandwidth of the media with higher priority can be satisfied first, thereby that the quality of media with higher quality is not affected.
Step 4: it is determined whether the DMP device supports the current format of media flow. If the DMP device supports the current format of media flow, the Step 6 is performed. Otherwise, the Step 5 is performed.
Step 5: the media format convert module of the IPTV2DMS converts the format of the media flow to the format supported by the DMP and transfers the converted media flow to the DMP. And then the Step 6 is performed.
Step 6: the DMP decodes the media flow and outputs the decoded media flow to displaying devices such as TV etc. connected with it through an AV interface for a subscriber to watch.
   The charging problem during the above operating procedure is mainly determined by the connection and contents access situations between the IPTV2DMS and operators, wherein the accounting manner is approximately the same with the manner by which general IP STB connects to the network to use the IPTV service, except that the IPTV2DMS may allow accessing a same type of service simultaneously to happen. If in the case of accessing a same type of service simultaneously, it is needed to charge at the same time according to the operator's charging rules, for example, two persons order two different films at the same time. If both of the films are charged according to number of watching times, it is needed to charge twice. However, as the above storing-forwarding mechanism is adopted by the IPTV2DMS, there is only one connection between the IPTV2DMS and the IPTV head-end actually. So when multiple subscribers watch the same film, it is just needed to pay for the same film once, thereby the subscriber's cost is saved.
   If the media contents are protected by digital copyright, the IPTV2DMS also need to be authorized to acquire corresponding decrypted key to play the encrypted media contents. These works are performed by the IPTV communication module of the IPTV2DMS. When the decrypted contents are spread in home network, contents can also be protected according to requirements of copyright protection, for example, contents are encrypted by using a Digital Transmission Contents Protection over IP (DTCP-IP) protocol.
   To sum up, the embodiments of the present invention use an IPTV receiving system to convert an IPTV service to a standard DMS service, makes it convenient for subscribers to watch an IPTV by different TVs without additional STB. In this way, subscriber's cost is reduced and playing quality is enhanced accompanying by decrease of subscribers' repeat paying due to the adoption of the storing-forwarding module.
   The foregoing is only preferred embodiments of the present invention. The protection scope of this invention, however, is not limited to the above description. Any changes or substitutions, within the technical scope disclosed by this invention, easily occurring to those skilled in the art should be covered by the protection scope of this invention. Therefore, the protection scope of the present invention should be according with the protection scope of the claims.

## Claims

1. A system for receiving an Internet Protocol Television (IPTV) service connected to an IPTV head-end and a displaying device,
wherein the system comprises an IPTV service to digital media server (DMS) service conversion device(IPTV2DMS) and a digital media player (DMP);
the IPTV2DMS is used for communicating with the IPTV head-end to acquire IPTV media information; converting the IPTV media information acquired to a DMS service; requesting the IPTV head-end for IPTV media flow; upon receiving the IPTV media flow, converting the IPTV media flow to a format supported by the DMP; and providing the converted IPTV media flow to the DMP; and
the DMP is used for requesting the IPTV2DMS for the IPTV media flow; and transferring the IPTV media flow to the displaying device upon decoding the IPTV media flow.

2. The system of claim 1, wherein the IPTV2DMS comprises:
an IPTV communication module, for communicating with the IPTV head-end to acquire the IPTV media information, requesting the IPTV head-end for the IPTV media flow, and upon receiving the IPTV media flow, transferring the IPTV media flow to a media flow format converting module through an instruction converting module;
the instruction converting module, for instruction conversion between a DMS service and an IPTV service;
a DMS function module, for providing the DMS service according to the IPTV media information;
the media flow format converting module, for converting the IPTV media flow to the format supported by the DMP.

3. The system of claim 2, wherein the IPTV2DMS further comprises:
a storing-forwarding module, for storing and forwarding the IPTV media flow.

4. The system of claim 1, wherein the IPTV2DMS is connected to the DMP through a physical communication interface supporting IP or through an intra-home IP network.

5. A method for receiving an Internet Protocol Television (IPTV) service, comprising:
A: acquiring, by an IPTV service to digital media server (DMS) service conversion device (IPTV2DMS), IPTV media information for an IPTV subscriber to select;
B: receiving ,by the IPTV2DMS, the IPTV media information selected by the IPTV subscriber, and requesting an IPTV head-end for an IPTV media flow selected by the subscriber;
C: upon receiving the IPTV media flow, converting, by the IPTV2DMS, the IPTV media flow to a format supported by a digital media player (DMP) device, and transmitting the converted IPTV media flow to the DMP;
D: upon decoding the converted IPTV media flow, transmitting, by the DMP, the converted IPTV media flow to a displaying device.

6. The method of claim 5, wherein the step A comprises:
receiving, by the IPTV2DMS, the IPTV media information from the IPTV head-end; and
converting the IPTV media information to a service information format of the DMS service, transmitting the converted IPTV media information to the DMP and displaying the converted IPTV media information for a subscriber to select through the DMP.

7. The method of claim 5, wherein the step C further comprises:
upon the format of the IPTV media flow being converted, storing the converted IPTV media flow.

8. The method of claim 5, further comprising:
predetermining a priority for the IPTV media flow;
wherein the step C further comprises: according to the priority of the IPTV media flow, providing the IPTV media flow having a higher priority to the DMP via the wide band preferentially.

9. The method of claim 5, wherein the step C comprises:
determining, by the IPTV2DMS, whether the DMP supports the current format of the IPTV media flow; if the DMP does not support the current format of the IPTV media flow, converting the current IPTV media flow to the format supported by the DMP; and providing the converted IPTV media flow to the DMP.

10. The method of claim 5, upon the IPTV media flow being received, wherein the step C further comprises:
decrypting the media flow via a private decrypting key authorized by digital copyright protection.
